# EUROPÄISCHE PATENTSCHRIFT

(11) **EP 4 453 507 B1**
(45) Veröffentlichungstag und Bekanntmachung des Hinweises auf die Patenterteilung: **04.02.2026**
(21) Anmeldenummer: 22836177.0
(22) Anmeldetag: 15.12.2022
(51) Int. Cl.: G01B 11/25

(54) **BELEUCHTUNGSVORRICHTUNG ZUM BELEUCHTEN EINER SZENE, KAMERASYSTEM UND VERFAHREN ZUM BELEUCHTEN EINER SZENE**
ILLUMINATION DEVICE FOR ILLUMINATING A SCENE, CAMERA SYSTEM, AND METHOD FOR ILLUMINATING A SCENE
DISPOSITIF D'ÉCLAIRAGE PERMETTANT D'ÉCLAIRER UNE SCÈNE, SYSTÈME DE CAMÉRAS ET PROCÉDÉ D'ÉCLAIRAGE D'UNE SCÈNE

(30) Priorität: 21.12.2021 DE 102021134130
(43) Veröffentlichungstag der Anmeldung: 30.10.2024
(73) Patentinhaber: TRUMPF Photonic Components GmbH, 89081 Ulm (DE)
(72) Erfinder: GRONENBORN, Stephan, 52066 Aachen (DE)
(74) Vertreter: Witte, Weller & Partner Patentanwälte mbB
(86) Internationale Anmeldenummer: PCT/EP2022/086128
(87) Internationale Veröffentlichungsnummer: WO 2023/117679

(56) Entgegenhaltungen:
- CN-A- 108 332 082
- CN-A- 111 123 537
- US-A1- 2020 103 672

## Beschreibung

### GEBIET DER ERFINDUNG

Die Erfindung betrifft eine Beleuchtungsvorrichtung zum Beleuchten einer Szene. Die Erfindung betrifft des Weiteren ein Kamerasystem, bei dem eine solche Beleuchtungsvorrichtung verwendet wird. Die Erfindung betrifft schließlich ein Verfahren zum Beleuchten einer Szene.

### HINTERGRUND DER ERFINDUNG

Moderne Kameras, die beispielsweise zur Abstandsmessung, Objekterkennung oder Gestenerkennung verwendet werden, benötigen spezielle Beleuchtungsprofile. Um mit einer Kamera, beispielsweise einer Standard-Kamera, ein zwei-dimensionales (2D) Kamerabild der Szene, beispielsweise eines Objektes, aufzunehmen, wird eine möglichst homogene Flutbeleuchtung benötigt, die die Szene mit möglichst gleichmäßiger Beleuchtungsstärke beleuchtet. Wenn die Kamera als drei-dimensionaler (3D) Sensor verwendet wird, wird eine Beleuchtung mit einem strukturierten Lichtmuster benötigt, wobei durch Triangulation ein Tiefenbild der beleuchteten Szene gewonnen werden kann.

Eine Beleuchtungsvorrichtung der eingangs genannten Art kann auch mit einer Lichtlaufzeit (Time-Of-Flight, TOF)-Kamera verwendet werden. Mit einer Flutbeleuchtung kann die volle Auflösung der Kamera genutzt werden, jedoch nur bei begrenzten Entfernungen, da die Gesamtleistung der Beleuchtungsvorrichtung an die bei Laserlichtquellen geforderte Augensicherheit angepasst sein muss. Die Verwendung eines strukturierten Lichtmusters, auch Spotmuster genannt, konzentriert die augensichere Energie auf wenige Pixel, wodurch das Signal-Rausch-Verhältnis auf diesen Pixeln erhöht ist und somit längere Messentfernungen ermöglicht werden, allerdings auf Kosten einer geringeren Auflösung. Wenn beide Beleuchtungsprofile von der Beleuchtungsvorrichtung erzeugt werden können, d.h. eine homogene Flutbeleuchtung sowie eine Spot-Beleuchtung, kann die TOF-Kamera in unterschiedlichen Messentfernungen messen. Wenn nur eines der beiden Beleuchtungsprofile bereitgestellt wird, begrenzt dies entweder die Messdistanz oder die Auflösung.

Diese speziellen Kombinationen von Funktionen in ein und derselben Kamera fordern entweder zwei verschiedene Lichtquellen, die individuell gesteuert werden, oder eine zwischen Flutbeleuchtung und Spotbeleuchtung umschaltbare Lichtquelle. Eine solche Beleuchtungsvorrichtung ist in dem Dokument CN 108332082 A beschrieben. Diese Beleuchtungsvorrichtung kombiniert die beiden Funktionen einer Flutbeleuchtung und einer Spotbeleuchtung, wobei die Beleuchtungsvorrichtung zwischen Flutbeleuchtung und Spotbeleuchtung umgeschaltet werden muss. Die Beleuchtungsvorrichtung weist eine Lichtquelle zum Emittieren eines Lichtbündels, eine Linse zum Divergieren oder Konvergieren des Lichtbündels, ein diffraktives optisches Element zum Aufweiten und Richten des Lichtbündels auf die zu beleuchtende Szene, und einen Prozessor auf, um das Lichtbündel zu steuern. In einem Ausführungsbeispiel ist die Linse eine Zoom-Linse, wobei der Prozessor dazu verwendet wird, die Brennweite der Linse zu verändern, um eine Flutbeleuchtung oder eine Spotbeleuchtung zu erreichen. In weiteren Ausführungsbeispielen weist das diffraktive optische Element ein erstes Beugungsmuster und ein zweites Beugungsmuster auf, wobei der Winkel zwischen benachbarten gebeugten Lichtbündeln nicht größer ist als der Öffnungswinkel des einfallenden Lichtbündels, um eine Flutbeleuchtung zu realisieren. Der Winkel zwischen benachbarten gebeugten Lichtbündeln, die durch das zweite Beugungsmuster gebeugt werden, ist größer als der Öffnungswinkel des einfallenden Lichtbündels, um eine Beleuchtung mit strukturiertem Licht zu realisieren. Die Lichtquelle umfasst eine erste Teil-Lichtquelle und eine zweite Teil-Lichtquelle, wobei der Prozessor die erste Teil-Lichtquelle steuert, um ein erstes Teil-Lichtbündel zu emittieren, und das erste Teil-Lichtbündel wird durch das diffraktive optische Element repliziert und aufgeweitet, um eine Flutbeleuchtung zu erzielen. Eine Einstellvorrichtung steuert die zweite Teil-Lichtquelle, um ein zweites Teil-Lichtbündel zu emittieren, und das zweite Teil-Lichtbündel wird kopiert und durch das diffraktive optische Element aufgeweitet, um eine Beleuchtung mit dem Spotmuster zu realisieren. Die erste Teil-Lichtquelle und die zweite Teil-Lichtquelle weisen unterschiedliche Eigenschaften hinsichtlich der lichtemittierenden Fläche, des Öffnungswinkels und/oder der Lichtmenge auf. Diese bekannte Beleuchtungsvorrichtung ist daher strukturell aufwändig und damit auch kostenaufwändig, da für die beiden verschiedenen Beleuchtungsprofile einer Flutbeleuchtung und einer Spotbeleuchtung entweder bewegliche optische Elemente, unterschiedliche Lichtquellen, diffraktive optische Elemente mit unterschiedlichen Beugungsmustern und/oder eine Lichtbündelsteuerung benötigt werden.

Ein weiterer Ansatz zum Beleuchten einer Szene ist beispielsweise aus der US 2020/103672 A1 bekannt.

### ZUSAMMENFASSENDE DARSTELLUNG DER ERFINDUNG

Es ist eine Aufgabe der vorliegenden Erfindung, eine Beleuchtungsvorrichtung bereitzustellen, die gleichzeitig eine Flutbeleuchtung und eine Spot-Beleuchtung zum Beleuchten einer Szene bereitstellen kann, und die dabei strukturell weniger aufwändig und weniger kostenaufwändig ist.

Der Erfindung liegt des Weiteren die Aufgabe zugrunde, ein Kamerasystem mit einer solchen Beleuchtungsvorrichtung sowie ein Verfahren zum Beleuchten einer Szene bereitzustellen.

Die Erfindung ist in den angehängten Ansprüchen definiert.

Erfindungsgemäß wird eine Beleuchtungsvorrichtung zum Beleuchten einer Szene bereitgestellt, mit einem Array von Lichtquellen, die dazu ausgelegt sind, jeweils ein Lichtbündel zu emittieren, weiterhin mit einer ersten Optik und einer zweiten Optik, wobei die erste Optik die von den Lichtquellen emittierten Lichtbündel empfängt und auf die zweite Optik richtet, wobei die erste Optik eine abbildende Optik ist, die die einzelnen Lichtbündel in die Szene als Spots projiziert, um die Szene mit einem Spotmuster zu beleuchten, und die zweite Optik eine aufweitende Optik ist, die die Lichtbündel teilweise aufweitet, um mit dem aufgeweiteten Anteil der Lichtbündel die Szene gleichzeitig mit dem Spotmuster mit einem im Wesentlichen homogenen Beleuchtungsprofil zu beleuchten, wobei der aufgeweitete Anteil der Lichtbündel weniger als 90 % der Lichtintensität der von den Lichtquellen emittierten Lichtbündel beträgt.

Die erfindungsgemäße Beleuchtungsvorrichtung erzeugt ein Beleuchtungsprofil in der zu beleuchtenden Szene, das die Summe aus einer im Wesentlichen homogenen Flutbeleuchtung und einer Spotbeleuchtung ist. Flutbeleuchtung und Spot-Beleuchtung werden gleichzeitig erzeugt und in die Szene gerichtet, ohne dass hierzu eine spezielle Steuerung der Lichtquellen, noch Lichtquellen mit unterschiedlichen Eigenschaften, noch bewegliche gesteuerte bzw. schaltbare Optiken erforderlich sind. Wie das Beleuchtungsprofil mit der gleichzeitigen Flutbeleuchtung und Spotbeleuchtung von der Kamera genutzt wird, wird später noch anhand eines erfindungsgemäßen Kamerasystems beschrieben.

Die erste Optik der Beleuchtungsvorrichtung ist eine abbildende Optik, die die Lichtquellen in die zu beleuchtende Szene abbildet, was gleichbedeutend damit ist, dass die einzelnen Lichtbündel in die Szene als Spot projiziert werden. Die erste Optik kann beispielsweise eine sammelnde einzelne Linse sein, wobei jedoch die erste Optik auch mehrere Linsen aufweisen kann. Die der ersten Optik nachgeschaltete zweite Optik dient zur Erzeugung der Flutbeleuchtung, die die Räume zwischen den einzelnen Spots in der Szene möglichst gleichmäßig mit Lichtintensität füllt. Die gleichmäßige Lichtintensität zwischen den Spots ist geringer als die Intensität der Spots. Die zweite Optik verteilt dazu räumlich nur einen Anteil der in den Lichtbündeln enthaltenen Lichtenergie auf die Szene. Die zweite Optik kann als diffusive, refraktive oder diffraktive Optik ausgebildet sein, die die einzelnen Lichtbündel, die von der ersten Optik kommen, teilweise aufweitet. Jedoch wird nicht die gesamte Lichtintensität der Lichtbündel aufgeweitet, wie dies beispielsweise bei Standard-Diffusoren der Fall bzw. gewünscht ist, sondern nur ein Anteil der Lichtintensität der Lichtbündel, so dass einerseits eine ausgeprägte Spotbeleuchtung mit höherer Bestrahlungsstärke in den Spots und andererseits eine im Wesentlichen homogene Bestrahlungsstärke mit geringerer Bestrahlungsstärke zwischen den Spots realisiert werden kann.

Die zweite Optik kann beispielsweise ein transmittierendes oder reflektierendes beugendes Element, beispielsweise ein diffraktiver Strahlteiler, sein. Prinzipiell kommen alle Arten von diffraktiven Elementen für die Verwendung in der erfindungsgemäßen Beleuchtungsvorrichtung in Frage. Die zweite Optik kann auch eine refraktive Optik sein, beispielsweise ein aus einem Mikrolinsen-Array gebildetes Streuelement, oder eine diffusive Optik, beispielsweise ein streuendes Element.

Das Array von Lichtquellen kann insbesondere ein zwei-dimensionales Array von Lichtquellen sein. Die Lichtquellen können Laserdioden sein, insbesondere oberflächenemittierende Laser mit vertikaler Kavität (VCSELs). Das von einem VCSEL emittierte Lichtbündel weist im Fernfeld typischerweise einen kreisförmigen Querschnitt auf, und der volle Öffnungswinkel des Lichtbündels, das von einem VCSEL emittiert wird, ist typischerweise klein, beispielsweise kleiner als 20°.

Zumindest die erste Optik kann in das Array von Lichtquellen integriert sein. Beispielsweise können die Lichtquellen VCSELs sein, wobei die erste Optik im Falle von substratseitig emittierenden Lasern in den Wafer bzw. in das Substrat integriert sein kann, auf dem die VCSELs angeordnet sind. Die zweite Optik kann mit der ersten Optik integral ausgebildet sein.

Vorzugsweise beträgt der von der zweiten Optik aufgeweitete Anteil der Lichtintensität der Lichtbündel weniger als 80 %, vorzugsweise weniger als 70 %, weiter vorzugsweise weniger als 60%, weiter vorzugsweise weniger als 50% der Lichtintensität der von den Lichtquellen emittierten Lichtbündel.

Je geringer der aus den Lichtbündeln abgelenkte bzw. aufgeweitete Anteil der Lichtenergie der Lichtbündel ist, desto mehr Lichtstärke verbleibt in der Spotbeleuchtung, was den Vorteil hat, dass die Messentfernung mit einer 3D-Kamera, beispielsweise einer TOF-Kamera, vergrößert wird. Dies ist insbesondere bei der 3D-Erfassung von weit entfernten Objekten nützlich. Umgekehrt, je mehr Lichtintensität aus den Lichtbündeln abgezweigt bzw. aufgeweitet wird, desto "heller" ist die Flutbeleuchtung, wodurch beispielsweise im Falle einer als 2D-Kamera verwendeten Kamera ein gut beleuchtetes 2D-Bild der Szene aufgenommen werden kann.

Weiter vorzugsweise weitet die zweite Optik die Lichtbündel mit einem maximalen Aufweitungswinkel auf, der gleich einem Winkelabstand, oder ein ganzzahliges Vielfaches davon, zwischen zwei Lichtbündeln abzüglich eines Öffnungswinkels eines Lichtbündels ist.

Diese Ausgestaltung unterscheidet sich von Standard-Aufweitungsoptiken, beispielsweise Diffusoren, die alle Lichtbündel des Arrays von Lichtquellen in die gesamte Szene streuen.

Dabei sind die zuvor genannten zwei Lichtbündel vorzugsweise unmittelbar benachbarte Lichtbündel.

In dieser Ausgestaltung kann der Aufweitungswinkel, mit dem die zweite Optik einen Anteil der Lichtenergie zwischen die Spots verteilt, auf den Raum zwischen den einzelnen Lichtbündeln begrenzt werden. Damit wird der kleinste maximale Aufweitungswinkel der einzelnen Lichtbündel erreicht.

Wenn die zweite Optik eine diffraktive Optik ist, ist die diffraktive Optik vorzugsweise so ausgebildet, dass der Winkel zwischen Intensitätsmaxima benachbarter Beugungsordnungen im Wesentlichen dem Öffnungswinkel eines Lichtbündels, geteilt durch eine ganze Zahl größer oder gleich 1, entspricht.

In dieser Ausgestaltung fächert die diffraktive Optik die einzelnen Lichtbündel in die einzelnen Beugungsordnungen auf, derart, dass die einzelnen Beugungsordnungen sich unmittelbar aneinander anschließen oder sogar überlappen. Der Öffnungswinkel ist hier der volle Öffnungswinkel eines Lichtbündels.

In diesem Zusammenhang ist es weiterhin bevorzugt, wenn die Lichtintensität am Ausgang der diffraktiven Optik in der jeweils null-ten Beugungsordnung zumindest 50%, vorzugsweise zumindest 100%, vorzugsweise zumindest 150%, weiter vorzugsweise zumindest 200% größer ist als in der Beugungsordnung mit der zweitgrößten Lichtintensität.

Diese Ausgestaltung ist für diffraktive Optiken eine Besonderheit, da üblicherweise diffraktive Optiken derart ausgestaltet werden, dass die null-te Beugungsordnung weitestgehend unterdrückt wird. Im Rahmen der vorliegenden Erfindung ist die genannte Ausgestaltung jedoch bevorzugt, weil die null-te Beugungsordnung der Ausbreitungsrichtung des Anteils der Intensität der Lichtstrahlenbündel zur Formation des Spotmusters entspricht. Hierdurch entsteht das Spotmuster in der Szene mit ausreichend hoher Bestrahlungsstärke, während die durch die erste und höheren Beugungsordnungen die Flutbeleuchtung erzeugt wird.

Wenn die zweite Optik eine refraktive Optik ist, die ein Array von Mikrolinsen aufweist, ist ein Füllfaktor der Linsen in dem Array kleiner als 100%, vorzugsweise kleiner als 90%, weiter vorzugsweise kleiner als 80%, weiter vorzugsweise kleiner als 70%, weiter vorzugsweise kleiner als 60%, weiter vorzugsweise kleiner als 50%.

Diese Ausgestaltung unterscheidet sich von refraktiven aufweitenden Optiken, die durch Mikrolinsenarrays gebildet sind, und die mit einem Array von VCSELs verwendet werden. Bei typischen refraktiven aufweitenden Optiken, die auf Mikrolinsen basieren, ist es stets das Ziel, den Füllfaktor der Linsen möglichst auf 100% zu bringen, um eine direkte, nicht abgelenkte Transmission durch die Optik zu vermeiden. Im Rahmen der vorliegenden Erfindung ist es dagegen bevorzugt, die refraktive Optik mit einem geringeren Füllfaktor auszugestalten, derart, dass ein signifikanter Anteil der Lichtenergie nicht abgelenkt wird. Dies kann in einer praktischen sehr einfachen Ausgestaltung des Mikrolinsenarrays dadurch erreicht werden, dass in das Mikrolinsenarray flache bzw. ebene Bereiche integriert werden, beispielsweise innerhalb jeder Linse, zwischen den Linsen, oder indem ein Teil der Linsen durch einen flachen bzw. ebenen Bereich ersetzt wird. Die flachen Bereiche sollten groß genug sein, um Beugung an Öffnungen, die durch die Ränder flachen Bereiche gebildet sind, zu minimieren. Die flachen Bereiche sollten daher Abmessungen in der Größenordnung von mehreren Wellenlängen des von den Lichtquellen emittierten Lichtes betragen.

Weiter erfindungsgemäß wird ein Kamerasystem bereitgestellt, mit einer Kamera, die einen Bildsensor aufweist, sowie einer Beleuchtungsvorrichtung nach einer oder mehreren der vorstehend genannten Ausgestaltungen, wobei erste Pixel des Bildsensors den mit dem im Wesentlichen homogenen Beleuchtungsprofil beleuchteten Teil der Szene aufnehmen und zweite Pixel das in die Szene projizierte Spotmuster aufnehmen.

Der überwiegende Teil der Pixel des Bildsensors "sieht" denjenigen Teil der Szene, der mit dem homogenen Flutlicht geringerer Bestrahlungsstärke beleuchtet wird, während ein geringerer Anteil der Pixel die kleineren Bereiche der Szene "sieht", die durch die Spots mit hoher Bestrahlungsstärke beleuchtet werden.

Vorzugsweise weist das Kamerasystem eine Kamerasteuerung auf, die dazu ausgelegt ist, die Belichtungszeit des Bildsensors einzustellen, wobei die Kamerasteuerung dazu ausgelegt ist, eine erste Belichtungszeit einzustellen, um mit den ersten Pixeln des Bildsensors die Szene mit dem im Wesentlichen homogenen Beleuchtungsprofil aufzunehmen, und eine zweite Belichtungszeit, die kürzer ist als die erste Belichtungszeit, um mit den zweiten Pixeln des Bildsensors die Szene mit dem in die Szene projizierten Spotmuster aufzunehmen.

Wenn der Bildsensor mit der ersten, langen oder längeren Belichtungszeit verwendet wird, werden die ersten Pixel ein ausreichendes Sensorsignal erzeugen, das eine Messung ermöglicht, während die zweiten Pixel überbelichtet sind und von der Messung ausgeschlossen werden. Dann kann die Kamera mit der kurzen bzw. kürzeren Belichtungszeit verwendet werden, wobei dann die ersten Pixel im Wesentlichen kein Signal oder ein zu schwaches Signal erzeugen und von der Messung ausgeschlossen werden. Die zweiten Pixel hingegen erzeugen eine ausreichende Signalstärke und erlauben eine Messung bei beispielsweise längeren Distanzen. Die beiden Messungen können dann in ein vollständiges Bild der Szene kombiniert werden.

Wenn die Kamera beispielsweise eine Standard-Kamera ist, ist es bevorzugt, wenn die Kamerasteuerung dazu ausgelegt ist, aus Signalwerten der ersten Pixel ein 2D-Bild der Szene aufzunehmen, und aus Signalwerten der zweiten Pixel mittels Triangulation 3D-Information über die Szene zu ermitteln. Das 2D-Bild wird , wie zuvor beschrieben, bei langer Belichtungszeit aufgenommen, und die 3D-Information bei kurzer Belichtungszeit.

Weiter vorzugsweise ist in diesem Fall die Kamerasteuerung dazu ausgelegt, die bei der ersten (langen bzw. längeren) Belichtungszeit von den zweiten Pixeln erhaltenen Signalwerte zumindest teilweise durch bei der zweiten (kurzen bzw. kürzeren) Belichtungszeit von den zweiten Pixeln erhaltene Signalwerte zu ersetzen.

Auf diese Weise kann ein volles 2D-Graustufenbild und zusätzlich die 3D-Information für die Positionen der Spots in dem Spotmuster und der Szene erhalten werden.

Die vorstehend genannte Ersetzung der Signalwerte der zweiten Pixel kann mit der Belichtungszeit und der relativen Bestrahlungsstärke gewichtet werden.

Wenn die Kamera eine Lichtlaufzeitkamera (TOF-Kamera) ist, ist die Kamerasteuerung vorzugsweise dazu ausgelegt, aus Signalwerten der ersten Pixel ein erstes 3D-Teilbild der Szene und aus Signalwerten der zweiten Pixel ein zweites 3D-Teilbild der Szene zu gewinnen, wobei die Kamerasteuerung dazu ausgelegt ist, die beiden 3D-Teilbilder zu einem vollständigen 3D-Bild der Szene zu kombinieren.

Bei einer TOF-Kamera, mit der ein Objekt in geringer Entfernung aufgenommen bzw. gemessen wird, ergibt die lange Belichtungszeit ein 3D-Bild für die ersten Pixel, während die zweiten Pixel überbelichtet sind. Das bei kurzer Belichtungszeit aufgenommene Bild ergibt das 3D-Teilbild nur für die zweiten Pixel, da die ersten Pixel ein zu schwaches Signal erzeugen. Durch Kombinieren der beiden Teilbilder wird ein 3D-Bild mit voller Auflösung ähnlich zu einer TOF-Kamera erhalten, die nur mit einer Flutbeleuchtung arbeitet. Wenn jedoch ein zu beobachtendes Objekt weit entfernt ist oder eine große Absorption bzw. geringe Reflexion aufweist, ergeben die zweiten Pixel zumindest bei der langen Belichtungszeit noch ein ausreichendes Signal, was es ermöglicht, ein 3D-Bild zu erhalten, das zwar eine geringere Auflösung besitzt, aber auch bei großen Messdistanzen oder Objekten, die nur wenig Licht zur Kamera zurückwerfen, noch 3D-Informationen liefert.

Weiter erfindungsgemäß wird ein Verfahren zum Beleuchten einer Szene bereitgestellt, mit den Schritten:
Emittieren, mittels eines Arrays von Lichtquellen, von einzelnen Lichtbündeln, Projizieren, mittels einer ersten Optik, der Lichtbündel als Spots in die Szene, um die Szene mit einem Spotmuster zu beleuchten,
gleichzeitig mit dem Projizieren der Lichtbündel als Spots, teilweises Aufweiten, mittels einer zweiten Optik, der Lichtbündel, um mit dem aufgeweiteten Anteil der Lichtbündel die Szene zusammen mit dem Spotmuster mit einem im Wesentlichen homogenen Beleuchtungsprofil zu beleuchten, wobei der aufgeweitete Anteil der Lichtbündel weniger als 90% der Gesamtintensität der Lichtbündel beträgt.

Das erfindungsgemäße Verfahren hat die gleichen Vorteile und Ausgestaltungen wie die erfindungsgemäße Beleuchtungsvorrichtung, wie sie oben beschrieben wurden und nachfolgend noch beschrieben werden.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### KURZBESCHREIBUNG DER ZEICHNUNGEN

Ausführungsbeispiele der Erfindung sind in den Zeichnungen dargestellt und werden mit Bezug auf diese hiernach näher beschrieben. Es zeigen:
Figur 1 eine Prinzipskizze einer nicht erfindungsgemäßen Beleuchtungsvorrichtung, die ein Array von Lichtquellen und eine erste Optik aufweist;
Figur 2 eine Prinzipskizze der Beleuchtungsvorrichtung in Fig. 1, zusätzlich mit einer zweiten Optik;
Figur 3 eine Prinzipskizze der Beleuchtungsvorrichtung in Fig. 1 zur Erläuterung von Winkelabstand zwischen von der Lichtquelle emittierten Lichtbündeln und deren Öffnungswinkel;
Figur 4 eine Prinzipskizze der Beleuchtungsvorrichtung in Fig. 2, wobei die zweite Optik eine diffraktive Optik ist;
Figur 5a) und b) eine Draufsicht und eine Seitenansicht einer zweiten Optik, die eine refraktive Optik ist;
Figur 6 eine Prinzipskizze einer erfindungsgemäßen Beleuchtungsvorrichtung, mit der eine Szene gleichzeitig mit einem Spotmuster und mit einem im Wesentlichen homogenen Beleuchtungsprofil beleuchtet wird;
Figur 7 eine Frontalansicht eines Beleuchtungsprofils;
Figur 8 eine Prinzipskizze eines Kamerasystems mit einer Kamera und einer Beleuchtungsvorrichtung; und
Figur 9 ein Flussdiagramm eines Verfahrens zum Beleuchten einer Szene.

In den Figuren sind gleiche oder vergleichbare Elemente durchweg mit den gleichen Bezugszeichen versehen.

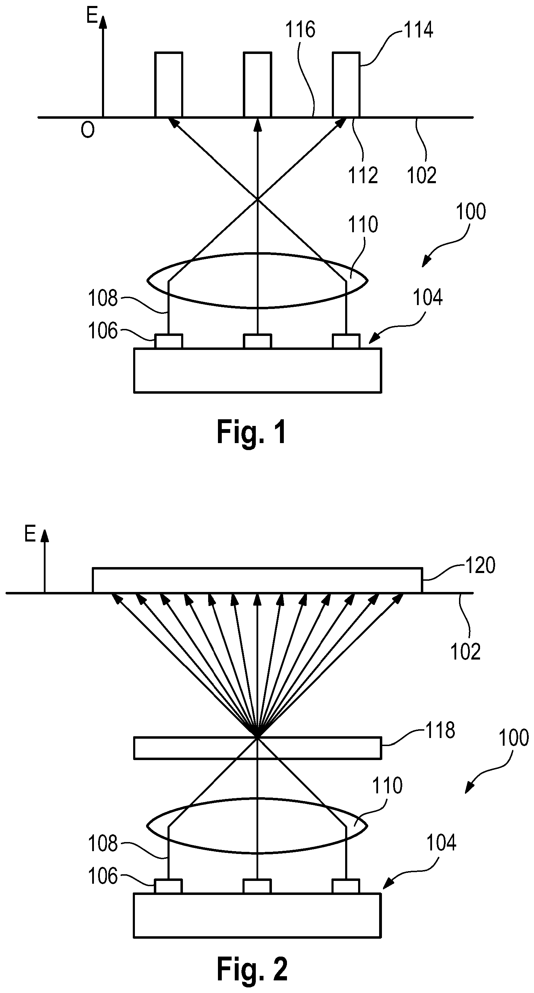

Mit Bezug auf Fig. 1 und 2 werden zunächst zwei Beleuchtungsvorrichtungen beschrieben, mit denen eine Szene entweder nur mit einem Spotmuster oder nur mit einem im Wesentlichen homogenen Beleuchtungsprofil ohne Spotmuster beleuchtet werden können.

Fig. 1 zeigt eine Beleuchtungsvorrichtung 100 zum Beleuchten einer Szene 102. Die Beleuchtungsvorrichtung 100 weist ein Array 104 von Lichtquellen 106 auf. In der schematischen Zeichnung in Fig. 1 sind beispielhaft drei Lichtquellen 106 gezeigt. Es versteht sich aber, dass das Array 104 eine große Anzahl an Lichtquellen 106 aufweisen kann, beispielsweise 100 oder mehr Lichtquellen 106. Die Lichtquellen 106 können insbesondere in einer zwei-dimensionalen Anordnung verteilt sein. Die Lichtquellen 106 können, und das Gleiche gilt für die später noch zu beschreibende erfindungsgemäße Ausgestaltung einer Beleuchtungsvorrichtung, Laserdioden, insbesondere oberflächenemittierende Laser mit vertikaler Kavität (VCSELs) sein. Das von den Lichtquellen emittierte Licht kann im sichtbaren und/oder im nahen infraroten oder infraroten Spektralbereich liegen. Jede Lichtquelle 106 emittiert ein Lichtbündel 108, wobei die Lichtbündel 108 in Fig. 1 durch jeweils eine Linie repräsentiert sind.

Die Beleuchtungsvorrichtung 100 weist weiterhin eine erste Optik 110 auf. Die Optik 110 ist eine abbildende Optik, die die einzelnen Lichtbündel 108 in die Szene 102 als Spots 112 projiziert. Mit anderen Worten bildet die erste Optik 110 die Lichtquellen 106 in die Szene 102 ab.

In Fig. 1 ist in einem oberen Diagramm die Bestrahlungsstärke E entlang der Szene 102 veranschaulicht. Im Wesentlichen die gesamte Energie des von den Lichtquellen 106 emittierten Lichts ist in dem Spotmuster enthalten, und die Bestrahlungsstärke E im Bereich der Spots 112 entsprechend hoch. In Bereichen 116 zwischen den Spots 112 ist keine oder so gut wie keine Lichtenergie vorhanden. Mit einem Beleuchtungsprofil, mit dem die Szene 102 mit einzelnen separierten Spots 112 beleuchtet wird, kann mittels einer Kamera ein 3D-Bild aufgenommen werden, auch in größeren Entfernungen der Szene 102 von der Kamera, jedoch mit einer geringen Auflösung.

Fig. 2 zeigt die Beleuchtungsvorrichtung 100 aus Fig. 1, wobei nun zusätzlich eine zweite Optik 118 vorhanden ist, wobei die erste Optik 110 die Lichtbündel 108 auf die zweite Optik 118 richtet. In dem nicht erfindungsgemäßen Beispiel in Fig. 2 kann die erste Optik 110 auch fehlen. Die zweite Optik 118 ist eine aufweitende Optik, die im Unterschied zu der Erfindung die gesamte in den Lichtbündeln 108 enthaltene Lichtenergie gleichmäßig in die gesamte zu beobachtende Szene streut, so dass die Szene 102 mit einem homogenen Beleuchtungsprofil 120 beleuchtet wird, wie in dem oberen Diagramm in Fig. 2 veranschaulicht ist. Wie ein Vergleich von Fig. 2 mit Fig. 1 ergibt, ist die Bestrahlungsstärke E (Leistung der eingehenden elektromagnetischen Energie, die auf eine Oberfläche trifft, bezogen auf die Größe der Fläche) in der Szene 102 im Wesentlichen homogen, jedoch geringer als in den einzelnen Spots 112 gemäß Fig. 1. Mit einem homogenen Beleuchtungsprofil 120 wie in Fig. 2 veranschaulicht lässt sich ein 2D-Bild mittels einer Kamera aufnehmen.

Wenn beispielsweise eine Standard-Kamera sowohl als Kamera zur Aufnahme von 2D-Bildern als auch 3D-Bildern verwendet werden soll, werden beide Beleuchtungsprofile, d.h. sowohl das Spotmuster gemäß Fig. 1 als auch das im Wesentlichen homogene Beleuchtungsprofil gemäß Fig. 2 benötigt. Dies kann dadurch realisiert werden, dass die Beleuchtungsvorrichtung 100 zwischen den beiden Beleuchtungsarten umgeschaltet wird, beispielsweise indem die zweite Optik 118 abwechselnd in den Strahlengang eingebracht und aus diesem wieder herausgebracht wird. Dies ist allerdings mit zusätzlichem strukturellem Aufwand verbunden. Nachfolgend wird beschrieben, wie es ermöglicht werden kann, dass die Szene 102 gleichzeitig mit einem Spotmuster gemäß Fig. 1 und einem im Wesentlichen homogenen Beleuchtungsprofil gemäß Fig. 2 beleuchtet werden kann, ohne dass es einer Umschaltung der Vorrichtung, beweglichen optischen Elementen oder unterschiedlichen Lichtquellen 106 in dem Array 104 bedarf.

Prinzipiell wird dies gemäß der Erfindung dadurch realisiert, dass die einzelnen Lichtbündel teilweise aufgeweitet, d.h. ein Anteil der in den Lichtbündeln enthaltenen Lichtenergie räumlich verteilt bzw. aufgefächert wird, insbesondere gebrochen, gestreut oder gebeugt wird, so dass einerseits ein ausgeprägtes Spotmuster erhalten bleibt, anderes die Bereiche in der Szene zwischen den Spots 112 mit einer hinreichenden Bestrahlungsstärke beleuchtet werden.

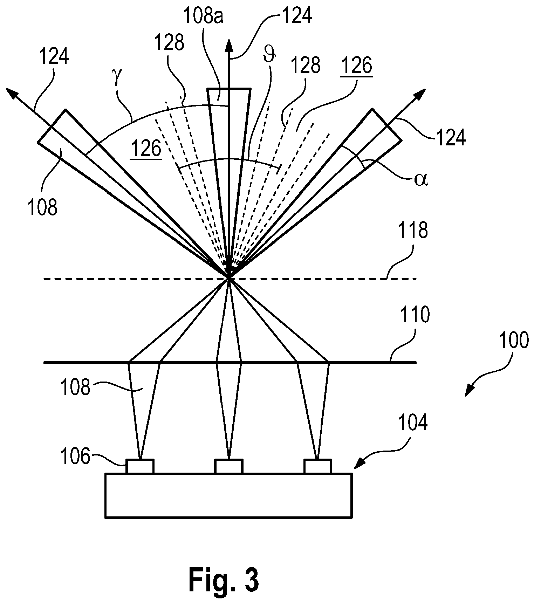

Fig. 3 zeigt wieder die Beleuchtungsvorrichtung 100 gemäß Fig. 1, wobei die erste Optik 110 zur Vereinfachung nur als Linie veranschaulicht ist. Die Lichtbündel 108 sind in Fig. 3 mit ihrem durch die Art der Lichtquellen 106 gegebenen Öffnungswinkel gezeigt. Im Falle von VCSELs als Lichtquellen 106 beträgt der natürliche Öffnungs- oder Divergenzwinkel wenige Grad, beispielsweise in einem Bereich von etwa 12° bis 15°. Die erste Optik 110 konvergiert die einzelnen Lichtbündel 108, die sich stromabwärts der ersten Optik 110 mit einem Öffnungswinkel α ausbreiten, der auch als Spotgrößenwinkel bezeichnet wird. Die einzelnen Lichtbündel 108 sind um einen Winkelabstand γ voneinander separiert. Während Fig. 3 nur eine zwei-dimensionale Darstellung ist, versteht es sich, dass der Öffnungswinkel α in zwei zueinander senkrechten Richtungen und der Winkelabstand γ im Fall eines zwei-dimensionalen Arrays 104 ebenfalls in zwei zueinander senkrechten Richtungen genommen wird, wobei der Öffnungswinkel α und/oder der Winkelabstand γ in den zwei zueinander senkrechten Richtungen unterschiedlich sein kann.

Um ein Beleuchtungsprofil in der Szene 102 zu erzeugen, das gleichzeitig bzw. in Summe ein Spotmuster gemäß Fig. 1 und ein im Wesentlichen homogenes Beleuchtungsprofil gemäß Fig. 2 ist, wird die zweite Optik 118 so ausgebildet, dass, wenn sie die Lichtbündel 108 von der ersten Optik 110 empfängt, nur einen Anteil von weniger als 90% der Intensität der einzelnen Lichtbündel 108 aus deren Ausbreitungsrichtung, die in Fig. 3 mit Pfeilen 124 veranschaulicht sind, in den jeweiligen Zwischenraum zwischen den Lichtbündeln 108 ablenkt. Vorzugsweise ist der abgelenkte Anteil der Lichtintensität der Lichtbündel geringer als 80%, vorzugsweise geringer als 70%, weiter vorzugsweise geringer als 60%, weiter vorzugsweise geringer als 50% der Lichtintensität der von den Lichtquellen 106 emittierten Lichtbündel 108. Die zweite Optik 118 muss lediglich den einen Anteil der Lichtintensität jedes der Lichtbündel mit einem maximalen Aufweitungswinkel ϑ aufweiten, der im Wesentlichen gleich oder größer ist als der Winkelabstand γ zwischen zwei Lichtbündeln 108.Allgemein gilt unabhängig von der Art der zweiten Optik vorzugsweise ϑ ≥ γ · i, wobei i eine ganze Zahl größer oder gleich 1 ist. Der Aufweitungswinkel ϑ bezieht sich auf die volle Breite bei halbem Maximum (FWHM) der durch die zweite Optik aufgeweiteten Intensität eines Lichtbündels 108. Der von der zweiten Optik 118 aufgeweitete bzw. gespreizte Anteil der Intensität eines beispielhaften Lichtbündels 108a ist mit unterbrochenen Linien 128 in Fig. 3 veranschaulicht. Der maximale Winkel ϑ kann minimiert werden, wenn der Winkel γ zwischen zwei unmittelbar benachbarten Lichtbündeln 108 genommen wird.

Anhand eines Beispiels wird dies erläutert. Angenommen, das Sichtfeld einer Kamera beträgt 60° x 45°, und dieses Sichtfeld soll mit 20 x 15 Spots mit einem Öffnungswinkel eines Spots (Spotgrößenwinkel) α von 0,5° gefüllt werden. Der Winkelabstand γ zwischen unmittelbar benachbarten Spots beträgt dann 3° in beiden zueinander senkrechten Richtungen (60°/20 Spots = 3° bzw. 45°/15 Spots = 3°). Die zweite Optik 118 kann dann ein zwei-dimensionales Aufweitungsmuster mit 3° vollem Öffnungswinkel bei halbem Intensitätsmaximum, oder für eine verbesserte Homogenität ein Vielfaches davon, aufweisen.

Um dies zu erreichen, kann die zweite Optik 118 eine diffusive, refraktive oder diffraktive Optik sein.

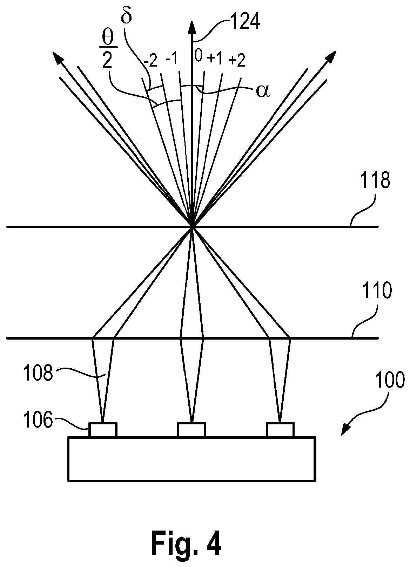

Fig. 4 zeigt den Fall, dass die zweite Optik 118 eine diffraktive Optik ist, beispielsweise ein diffraktiver Strahlteiler, die die einzelnen Lichtbündel 108 in mehrere Lichtbündel durch Beugung aufteilt. Die diffraktive Optik erzeugt vorzugsweise N definierte gebeugte Strahlen in N Beugungsordnungen (ausschließlich der nullten Beugungsordnung) möglichst gleicher Intensität, weist vorzugsweise eine definierte maximale Beugungsordnung bzw. einen definierten maximalen Beugungswinkel θ auf, während die Lichtintensität jenseits der maximalen Beugungsordnung vorzugsweise rasch abfällt. In dem Beispiel in Fig. 4 ist die maximale Beugungsordnung +2 bzw. -2, und N somit 4. Der maximale Beugungswinkel θ ist dann der volle Winkel zwischen den maximalen Beugungsordnungen. Der maximale Beugungswinkel kann der Winkelabstand γ zwischen benachbarten Lichtbündeln 108 abzüglich des Öffnungs- oder Spotgrößenwinkels α sein, wobei insbesondere θ = γ·i - α sein kann, wobei i eine ganze Zahl ist. Der Aufweitungswinkel ϑ ergibt sich vorzugsweise als ϑ = θ + α. Ein maximaler Winkel δ zwischen den unterschiedlichen Beugungsordnungen liegt vorzugsweise in der Größenordnung des Öffnungswinkels oder Spotgrößenwinkels α, der in dem vorstehend genannten Beispiel 0,5° beträgt, so dass die einzelnen gebeugten Bilder der Spots unmittelbar aneinandergrenzen oder sogar überlappen. Der maximale Winkel δ zwischen den Beugungsordnungen kann auch kleiner sein, derart, dass die Bilder der einzelnen Spots einander überlappen. Sehr gute Ergebnisse werden erreicht, wenn der maximale Winkel δ zwischen den Beugungsordnungen dem Öffnungswinkel (Spotgrößenwinkel) α geteilt durch eine ganze Zahl entspricht, d.h. δ = α/j, wobei j eine ganze Zahl ist.

Die zweite Optik 118 kann auch eine refraktive bzw. diffusive Optik sein, die in dem vorstehend genannten Beispiel die jeweiligen Lichtbündel mit einem Aufweitungswinkel von 3° in beiden zueinander senkrechten Richtungen aufweitet.

Sowohl im Fall einer diffraktiven Optik als auch einer refraktiven oder diffusiven Optik ist die zweite Optik 118 vorzugsweise so ausgebildet, dass ein wesentlicher Anteil der Lichtintensität jedes Lichtbündels 108 nicht gebeugt bzw. nicht gestreut wird. Mit anderen Worten ist im Fall einer diffraktiven Optik als zweite Optik 118 diese so ausgebildet, dass die Lichtintensität am Ausgang der diffraktiven Optik in der null-ten Beugungsordnung zumindest 50% größer ist als in der Beugungsordnung mit der zweitgrößten Lichtintensität. Vorzugsweise ist die Lichtintensität am Ausgang der diffraktiven Optik in der jeweils null-ten Beugungsordnung zumindest 100%, vorzugsweise zumindest 150%, weiter vorzugsweise zumindest 200% größer als in der Beugungsordnung mit der zweitgrößten Lichtintensität. Ähnliches gilt für den Fall, dass die zweite Optik 118 eine diffuse Optik ist. Auch in diesem Fall ist es bevorzugt, wenn die nicht abgelenkte Intensität am Ausgang der diffusiven Optik in den vorstehend genannten Größenordnungen größer ist als in den gestreuten Richtungen.

Eine diffraktive Optik kann als transmissive oder reflektive diffraktive Optik ausgebildet sein. Die diffraktive Optik kann als Strichgitter, Lochgitter, Echellegitter, Hologrammgitter, etc. ausgebildet sein, sofern die diffraktive Optik wie zuvor beschrieben einen Anteil der Lichtintensität von weniger als 90% aus den Lichtbündeln in die erste, zweite und weitere Beugungsordnungen beugt.

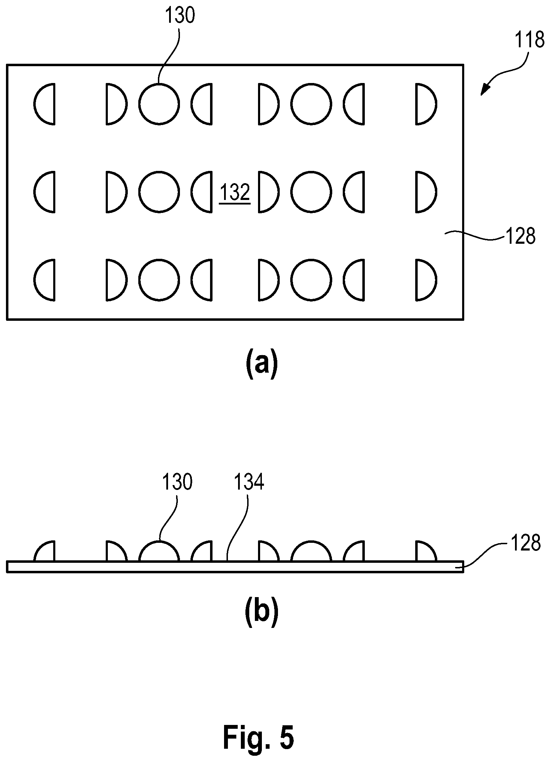

Fig. 5a) und b) zeigen eine zweite Optik 118, die als refraktive Optik ausgebildet ist. Die zweite Optik 118 ist in diesem Beispiel als ein Array 128 von Mikrolinsen 130 ausgebildet. Im Unterschied zu typischen auf Mikrolinsen basierenden aufweitenden Optiken, bei denen es gewünscht ist, den Füllfaktor der Linsen nahe 100% zu bringen, um Streuverluste und insbesondere eine unmittelbare, nicht abgelenkte Transmission durch die Optik zu vermeiden, ist es bei dem Array 128 von Mikrolinsen 130 vorgesehen, dass bestimmte Bereiche 132 des Arrays 128 das jeweilige Lichtbündel nicht ablenken oder streuen, so dass ein signifikanter Anteil der Lichtenergie nicht aufgeweitet wird. Vorzugsweise beträgt der Füllfaktor der Linsen in dem Array weniger als 90%, weiter vorzugsweise weniger als 80%, weiter vorzugsweise weniger als 70%, weiter vorzugsweise weniger als 60%, weiter vorzugsweise weniger als 50%. Fig. 5a) und b) zeigen als einfaches Beispiel, dass flache Bereiche 134 beispielsweise innerhalb mancher oder aller Linsen oder zwischen den Linsen in das Array integriert werden. Nicht aufweitende Bereiche können auch dadurch realisiert werden, indem ein Teil der Linsen weggelassen wird, um so einen Füllgrad des Arrays mit Linsen von deutlich unterhalb von 100 %, beispielsweise von 50% zu erreichen. Die flachen Bereiche 134 sollten groß genug sein, so dass Beugungsverluste, die durch Ränder verursacht werden, minimiert werden. Mit anderen Worten sollten durch die flachen Bereiche geschaffene Aperturen eine Größe in der Größenordnung von mehreren Wellenlängen des von den Lichtquellen emittierten Lichts aufweisen.

Eine diffusive Optik als die zweite Optik 118 kann eine streuende Scheibe, beispielsweise eine Scheibe mit rauher Oberfläche, oder ein Milchglas sein, wobei auch hier Bereiche vorhanden sind, die keine Streuwirkung aufweisen, um einen wesentlichen Anteil der Intensität der Lichtbündel 108 nicht zu streuen, um ein ausgeprägtes Spotmuster im Beleuchtungsprofil aufrecht zu erhalten.

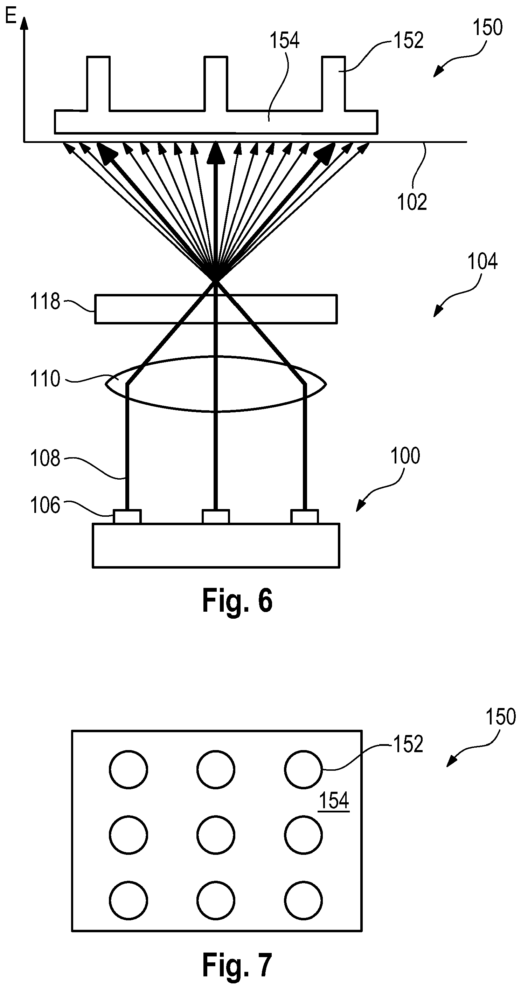

Fig. 6 zeigt eine Beleuchtungsvorrichtung 100, die die vorstehend beschriebenen Aspekte in sich vereint. Die Beleuchtungsvorrichtung 100 weist das Array 104 von Lichtquellen 106 auf, die jeweils ein Lichtbündel 108 emittieren. Die Lichtbündel 108 werden von der abbildenden ersten Optik 110 in die Szene 102 projiziert. Die zweite Optik 118 empfängt die Lichtbündel 108 von der ersten Optik 110 und weitet einen Anteil von weniger als 90% der Lichtintensität der einzelnen Lichtbündel 108 auf. Die zweite Optik 118 ist wie oben beschrieben ausgebildet, beispielsweise als beugende, brechende oder streuende Optik mit den oben beschriebenen Eigenschaften. Das in der Szene 102 resultierende Beleuchtungsprofil 150 enthält gleichzeitig ein Spotmuster aus Spots 152 und gleichzeitig dazu ein im Wesentlichen homogenes Beleuchtungsprofil 154. Mit anderen Worten ist das Beleuchtungsprofil 150 die Summe aus dem Spotmuster 152 und dem im Wesentlichen homogenen Beleuchtungsprofil 154. Die einzelnen Spots 152 weisen eine größere Intensität bzw. Bestrahlungsstärke E in der Szene 102 als das im Wesentlichen homogene Beleuchtungsprofil 154 auf. Der Vorteil der Beleuchtungsvorrichtung 100 besteht darin, dass die Lichtquellen 106 weder untereinander unterschiedlich sein oder unterschiedlich betrieben werden müssen, noch dass Optiken wie die erste Optik 110 und/oder die zweite Optik 118 verlagert oder in den oder aus dem Strahlengang gebracht werden müssen.

Fig. 7 zeigt das Beleuchtungsprofil 150 in einer Frontalansicht mit den Spots 152 und dem im Wesentlichen homogenen Beleuchtungsprofil 154.

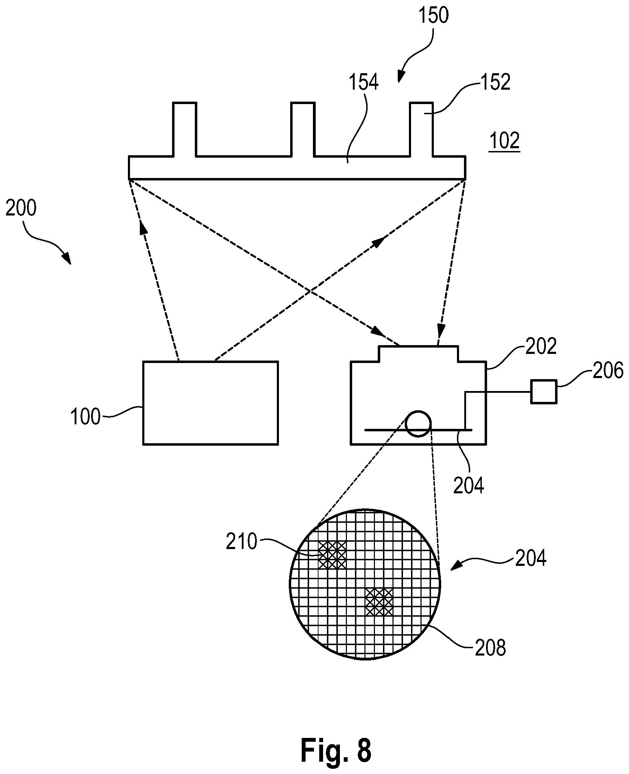

Fig. 8 zeigt ein Kamerasystem 200, das die Beleuchtungsvorrichtung 100 nach einer oder mehreren der oben beschriebenen Ausführungsformen und eine Kamera 202 aufweist. Die Beleuchtungsvorrichtung 100 beleuchtet die Szene 102 mit dem Beleuchtungsprofil 150, das gleichzeitig ein Spotmuster aus Spots 152 und ein im Wesentlichen homogenes Beleuchtungsprofil 154 mit gegenüber dem Spotmuster geringerer Beleuchtungsstärke enthält, wie oben beschrieben wurde.

Die Kamera 202 weist einen Bildsensor 204 auf. In Fig. 8 ist ein vergrößerter Ausschnitt des Bildsensors 204 in Draufsicht gezeigt. Die Kamera 202 weist des Weiteren eine Kamerasteuerung 206 auf.

Die Kamera 202 nimmt die Szene 102, die mit dem Beleuchtungsprofil 150 beleuchtet ist, auf. Dabei sehen erste Pixel 208 des Bildsensors 204, die in dem vergrößerten Ausschnitt in Fig. 8 nicht schraffiert sind, den mit dem im Wesentlichen homogenen Beleuchtungsprofil 154 beleuchteten größeren Teil der Szene. Zweite Pixel 210, die in dem vergrößerten Ausschnitt des Bildsensors 204 in Fig. 8 schraffiert sind, sehen hingegen den kleineren Teil der Szene, in den das Spotmuster mit den Spots 152 projiziert wird.

Die Kamerasteuerung 206 ist dazu ausgelegt, die Belichtungszeit des Bildsensors 204 einzustellen. Dabei ist die Kamerasteuerung 206 dazu ausgelegt, eine erste Belichtungszeit T₁ einzustellen, um mit den ersten Pixeln 208 des Bildsensors 204 die Szene 102 mit dem im Wesentlichen homogenen Beleuchtungsprofil 154 aufzunehmen. Die Kamerasteuerung 206 ist des Weiteren dazu ausgelegt, eine zweite Belichtungszeit T₂ einzustellen, die kürzer ist als die erste Belichtungszeit T₁, um mit den zweiten Pixeln 210 des Bildsensors 204 die Szene 102 mit dem in die Szene projizierten Spotmuster mit den Spots 152 aufzunehmen.

Wenn die erste (längere) Belichtungszeit T₁ eingestellt ist, werden die ersten Pixel 208 ein im Hinblick auf das Signal-Rausch-Verhältnis ausreichendes Sensorsignal geben, das eine Messung ermöglicht, während die zweiten Pixel 210 überbelichtet sein werden und von der Messung ausgeschlossen werden. Dann kann die Kamera mit der zweiten (kürzeren) Belichtungszeit T₂ verwendet werden, wobei dann die ersten Pixel 208 kein Bildsignal oder ein zu schwaches Bildsignal erzeugen, da das im Wesentlichen homogene Beleuchtungsprofil 154 eine vergleichsweise geringe Bestrahlungsstärke E aufweist. Die ersten Pixel 208 tragen somit nicht zur Messung bei und werden von dieser ausgeschlossen. Die zweiten Pixel 210 ergeben bei der kurzen Belichtungszeit T₂ eine gute Signalstärke und erlauben eine Messung auch bei größeren Entfernungen zur Szene 102. Beide Messungen, d.h. die Messung bei der kurzen Belichtungszeit und die Messung bei der langen Belichtungszeit können dann in ein vollständiges Bild der Szene 102 kombiniert werden.

Die Kamera 202 kann beispielsweise eine Standard-Kamera oder eine Lichtlaufzeit (TOF)-Kamera sein.

Im Falle, dass die Kamera 202 eine Standard-Kamera ist, kann mit der Kamera 202 bei Einstellen der kürzeren Belichtungszeit T₂ der mit dem Spotmuster beleuchtete Teil der Szene 202 aufgenommen werden, wobei dann die Kamerasteuerung aus den Signalwerten der zweiten Pixel 210 mittels Triangulation 3D-Information über die Szene 102 ermittelt, d.h. ein Tiefenbild von der Szene mit einer der Dichte der Spots in der Szene 102 entsprechenden Auflösung aufnehmen kann. Wenn die längere Belichtungszeit eingestellt wird, kann mit der Kamera 202 ein herkömmliches 2D-Bild mittels der ersten Pixel 208 aufgenommen werden, während die zweiten Pixel 210 überbelichtet sind. Die Signalwerte der zweiten Pixel 210 können in einem Verarbeitungsschritt mit den Signalwerten der zweiten Pixel bei der kurzen Belichtungszeit T₂ ersetzt werden, wobei ggf. die Ersetzung mit der Belichtungszeit und der relativen Bestrahlungsstärke gewichtet werden kann. Insgesamt kann ein volles zwei-dimensionales Bild, beispielsweise ein Graustufenbild und zusätzlich die drei-dimensionale Information für die Positionen der Spots 152 in dem Spotmuster des Beleuchtungsprofils 150 erhalten werden.

Wenn die Kamera 202 eine Lichtlaufzeit (TOF)-Kamera ist, kann eine nahe zur Kamera 202 gelegene Szene 102, beispielsweise ein Objekt in der Nähe der Kamera, aufgenommen werden. Wenn die lange Belichtungszeit T₁ eingestellt wird, wird ein 3D-Teilbild von den ersten Pixeln 208 erzeugt, während die zweiten Pixel 210 überbelichtet sind und von der Messung ausgeschlossen werden. Bei der kurzen Belichtungszeit T₂ ergibt sich ein 3D-Teilbild nur aus den Signalwerten der zweiten Pixel, da die Signalwerte der ersten Pixel 208 zu gering sind. Durch Kombinieren der beiden 3D-Teilbilder ergibt sich ein voll aufgelöstes 3D-Bild. Im Unterschied zu einer TOF-Kamera, die mit einer Beleuchtungsvorrichtung betrieben wird, die nur eine Flutbeleuchtung bereitstellt, kann mit dem erfindungsgemäßen Kamerasystem jedoch auch eine fernab gelegene Szene 102, beispielsweise ein fern von der Kamera 202 befindliches Objekt, aufgenommen werden, oder ein Objekt, das eine starke Absorption bzw. geringe Reflexion besitzt, da die zweiten Pixel 210 immer noch ein gutes Signal liefern, zumindest wenn die längere Belichtungszeit T₁ eingestellt wird. Dies bedeutet, dass es das erfindungsgemäße Kamerasystem selbst bei größeren Messentfernungen oder bei der Aufnahme von Szenen, die nur wenig Beleuchtungslicht zurückwerfen, ermöglicht, zumindest ein 3D-Teilbild zu erhalten, wenn auch mit geringerer Auflösung. Dies ist ein wesentlicher Unterschied zu dem herkömmlichen Fall, dass die TOF-Kamera mit einer Beleuchtungsvorrichtung betrieben wird, die nur eine Flutbeleuchtung bereitstellt.

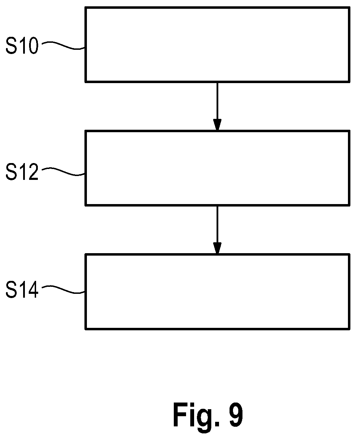

In Fig. 9 ist ein Flussdiagramm eines Verfahrens zum Beleuchten einer Szene gezeigt. Das Verfahren weist einen Schritt S10 auf, gemäß dem mittels des Arrays 104 von Lichtquellen 106 einzelne Lichtbündel 108 emittiert werden.

In einem Schritt S12 werden mittels der ersten Optik 110 die Lichtbündel 108 als Spots 152 in die Szene 102 projiziert, um die Szene 102 mit einem Spotmuster zu beleuchten.

In einem Schritt S14 werden gleichzeitig mit dem Projizieren der Lichtbündel 108 als Spots 152 mittels einer zweiten Optik die Lichtbündel 108 teilweise aufgeweitet, insbesondere gestreut oder gebeugt, um mit dem gestreuten bzw. gebeugten Anteil der Lichtintensität der Lichtbündel 108 die Szene zusammen mit dem Spotmuster 152 mit einem im Wesentlichen homogenen Beleuchtungsprofil 154 zu beleuchten. Der gestreute bzw. gebeugte Anteil der Lichtintensität der Lichtbündel 108 beträgt dabei weniger als 90% der Gesamtintensität der Lichtbündel 108.

Mit dem Verfahren kann somit ein Beleuchtungsprofil 150 erzeugt werden, wie es in Fig. 6 gezeigt ist.

## Patentansprüche

1. Beleuchtungsvorrichtung zum Beleuchten einer Szene, mit einem Array (104) von Lichtquellen (106), die dazu ausgelegt sind, jeweils ein Lichtbündel (108) zu emittieren, weiterhin mit einer ersten Optik (110) und einer zweiten Optik (118), wobei die erste Optik (110) die von den Lichtquellen (106) emittierten Lichtbündel (108) empfängt und auf die zweite Optik (118) richtet, wobei die erste Optik (110) eine abbildende Optik ist, die die einzelnen Lichtbündel (108) in die Szene als Spots (152) projiziert, um die Szene mit einem Spotmuster zu beleuchten, und die zweite Optik (118) eine aufweitende Optik ist, die die einzelnen Lichtbündel (108) teilweise aufweitet, um mit dem aufgeweiteten Anteil der Lichtbündel (108) die Szene gleichzeitig mit dem Spotmuster mit einem im Wesentlichen homogenen Beleuchtungsprofil (154) zu beleuchten, wobei der aufgeweitete Anteil der Lichtbündel (108) weniger als 90% der Lichtintensität der von den Lichtquellen (106) emittierten Lichtbündel (108) beträgt.

2. Beleuchtungsvorrichtung nach Anspruch 1, wobei der aufgeweitete Anteil der Lichtbündel (108) weniger als 80%, vorzugsweise weniger als 70%, weiter vorzugsweise weniger als 60%, weiter vorzugsweise weniger als 50% der Lichtintensität der von den Lichtquellen (106) emittierten Lichtbündel (108) beträgt.

3. Beleuchtungsvorrichtung nach Anspruch 1 oder 2, wobei die zweite Optik (118) die Lichtbündel (108) mit einem Aufweitungswinkel (ϑ) aufweitet, der gleich einem Winkelabstand (γ), oder ein ganzzahliges Vielfaches davon, zwischen zwei Lichtbündeln (108) ist.

4. Beleuchtungsvorrichtung nach Anspruch 3, wobei die zwei Lichtbündel (106) unmittelbar benachbarte Lichtbündel sind.

5. Beleuchtungsvorrichtung nach einem der Ansprüche 1 bis **4,** wobei die zweite Optik (118) eine diffraktive, refraktive oder diffusive Optik ist.

6. Beleuchtungsvorrichtung nach einem der Ansprüche 1 bis 5, wobei die zweite Optik (118) eine diffraktive Optik ist, wobei die diffraktive Optik so ausgebildet, dass der Winkel (δ) zwischen Intensitätsmaxima benachbarter Beugungsordnungen im Wesentlichen dem Öffnungswinkel (α) eines Lichtbündels (108), geteilt durch eine ganze Zahl größer oder gleich 1, entspricht.

7. Beleuchtungsvorrichtung nach einem der Ansprüche 1 bis 6, wobei die zweite Optik (118) eine diffraktive Optik ist, die einzelnen Lichtbündel (108) jeweils mit einem maximalen Beugungswinkel beugt, der gleich einem Winkelabstand (γ), oder ein ganzzahliges Vielfaches davon, zwischen zwei Lichtbündeln (108) abzüglich eines Öffnungswinkels (α) eines Lichtbündels (108) ist.

8. Beleuchtungsvorrichtung nach einem der Ansprüche 1 bis 7, wobei die zweite Optik (118) eine diffraktive Optik ist, und wobei die Lichtintensität am Ausgang der diffraktiven Optik in der jeweils null-ten Beugungsordnung zumindest 50% größer ist als in der Beugungsordnung mit der zweitgrößten Lichtintensität.

9. Beleuchtungsvorrichtung nach Anspruch 8, wobei die Lichtintensität am Ausgang der diffraktiven Optik in der jeweils null-ten Beugungsordnung zumindest 100%, vorzugsweise zumindest 150%, weiter vorzugsweise zumindest 200% größer ist als in der Beugungsordnung mit der zweitgrößten Lichtintensität.

10. Beleuchtungsvorrichtung nach einem der Ansprüche 1 bis 5, wobei die zweite Optik (118) eine refraktive Optik ist, die ein Array (128) von Mikrolinsen (130) aufweist, wobei ein Füllfaktor der Mikrolinsen (130) in dem Array kleiner als 100%, vorzugsweise kleiner als 90 %, weiter vorzugsweise kleiner als 80%, weiter vorzugsweise kleiner als 70%, weiter vorzugsweise kleiner als 60%, weiter vorzugsweise kleiner als 50% ist.

11. Kamerasystem, mit einer Kamera (202), die einen Bildsensor (204) aufweist, weiterhin mit einer Beleuchtungsvorrichtung (100) nach einem der Ansprüche 1 bis 10, wobei erste Pixel (208) des Bildsensors (204) den mit dem im Wesentlichen homogenen Beleuchtungsprofil (154) beleuchteten Teil der Szene aufnehmen und zweite Pixel (210) das in die Szene projizierte Spotmuster aufnehmen.

12. Kamerasystem nach Anspruch 11, weiterhin mit einer Kamerasteuerung (206), die dazu ausgelegt ist, die Belichtungszeit des Bildsensors (204) einzustellen, wobei die Kamerasteuerung (206) dazu ausgelegt ist, eine erste Belichtungszeit einzustellen, um mit den ersten Pixeln (208) des Bildsensors (204) die Szene mit dem im Wesentlichen homogenen Beleuchtungsprofil (154) aufzunehmen, und eine zweite Belichtungszeit, die kürzer ist als die erste Belichtungszeit, um mit den zweiten Pixeln (210) des Bildsensors (204) die Szene mit dem in die Szene projizierten Spotmuster aufzunehmen.

13. Kamerasystem nach Anspruch 11 oder 12, wobei die Kamerasteuerung (206) dazu ausgelegt ist, aus Signalwerten der ersten Pixel (208) ein 2D-Bild der Szene aufzunehmen, und aus Signalwerten der zweiten Pixel mittels Triangulation 3D-Information über die Szene zu ermitteln.

14. Kamerasystem nach Anspruch 12 oder 13, wobei die Kamerasteuerung (206) dazu ausgelegt ist, die bei der ersten Belichtungszeit von den zweiten Pixeln (210) erhaltenen Signalwerte zumindest teilweise durch bei der zweiten Belichtungszeit von den zweiten Pixeln (210) erhaltene Signalwerte zu ersetzen.

15. Kamerasystem nach Anspruch 12, wobei die Kamera (202) eine Lichtlaufzeitkamera ist, und wobei die Kamerasteuerung (206) dazu ausgelegt ist, aus Signalwerten der ersten Pixel (208) ein erstes 3D-Teilbild der Szene und aus Signalwerten der zweiten Pixel (210) ein zweites 3D-Teilbild der Szene zu gewinnen, wobei die Kamerasteuerung dazu ausgelegt ist, die beiden 3D-Teilbilder zu einem 3D-Bild der Szene zu kombinieren.

16. Verfahren zum Beleuchten einer Szene, mit den Schritten:
Emittieren, mittels eines Arrays (104) von Lichtquellen (106), von einzelnen Lichtbündeln (108),
Projizieren, mittels einer ersten Optik (110), der Lichtbündel (108) als Spots (152) in die Szene, um die Szene mit einem Spotmuster zu beleuchten,
gleichzeitig mit dem Projizieren der Lichtbündel (108) als Spots, teilweises Aufweiten, mittels einer zweiten Optik (118), der Lichtbündel (108), um mit dem aufgeweiteten Anteil der Lichtbündel (108) die Szene zusammen mit dem Spotmuster mit einem im Wesentlichen homogenen Beleuchtungsprofil (154) zu beleuchten, wobei der aufgeweitete Anteil der Lichtbündel (108) weniger als 90% der Gesamtintensität der Lichtbündel (108) beträgt.

## Claims

1. Illumination device for illuminating a scene, comprising an array (104) of light sources (106) adapted to emit respective light beams (108), further comprising a first optical unit (110) and a second optical unit (118), wherein the first optical unit (110) receives the light beams (108) emitted by the light sources (106) and directs them onto the second optical unit (118), wherein the first optical unit (110) is an imaging optical unit, which projects the individual light beams (108) into the scene as spots (152) in order to illuminate the scene with a spot pattern, and the second optical unit (118) is an expanding optical unit, which partly expands the individual light beams (108) in order, with the expanded proportion of the light beams (108), to illuminate the scene simultaneously with the spot pattern with a substantially homogeneous illumination profile (154), wherein the expanded proportion of the light beams (108) amounts to less than 90% of the light intensity of the light beams (108) emitted by the light sources (106).

2. Illumination device according to claim 1, wherein the expanded proportion of the light beams (108) amounts to less than 80%, preferably less than 70%, further preferably less than 60%, further preferably less than 50%, of the light intensity of the light beams (108) emitted by the light sources (106).

3. Illumination device according to claim 1 or 2, wherein the second optical unit (118) expands the light beams (108) with an expansion angle (ϑ), which is equal to an angular distance (γ), or an integral multiple thereof, between two light beams (108).

4. illumination device according to claim 3, wherein the two light beams (106) are directly adjacent light beams.

5. Illumination device according ot any of claims 1 to 4, wherein the second optical unit (118) is a diffractive, refractive or diffusive optical unit.

6. Illumination device according to any of claims 1 to 5, wherein the second optical unit (118) is a diffractive optical unit, wherein the diffractive optical unit is configured such that the angle (δ) between intensity maxima of adjacent orders of diffraction substantially corresponds to the aperture angle (α) of a light beam (108), divided by an integer greater than or equal to 1.

7. Illumination device according to any of claims 1 to 6, wherein the second optical unit (118) is a diffractive optical unit, which diffracts the individual light beams (108) respectively with a maximum diffraction angle which is equal to an angular distance (γ), or an integer multiple thereof, between two light beams (108) minus an aperture angle (α) of a light beam (108).

8. Illumination device according to any of claims 1 to 7, wherein the second optical unit (118) is a diffractive optical unit, and wherein the light intensity at the output of the diffractive optical unit in the respective zeroth order of diffraction is at least 50% greater than in the order of diffraction with the second highest light intensity.

9. Illumination device according to claim 8, wherein the light intensity at the output of the diffractive optical unit in the respective zeroth order of diffraction is at least 100%, preferably at least 150%, further preferably at least 200%, greater than in the order of diffraction with the second highest light intensity.

10. Illumination device according to any of claims 1 to 5, wherein the second optical unit (118) is a refractive optical unit having an array (128) of microlenses (130), wherein a fill factor of the microlenses (130) in the array is less than 100%, preferably less than 90%, further preferably less than 80%, further preferably less than 70%, further preferably less than 60%, further preferably less than 50%.

11. Camera system, comprising a camera (202) having an image sensor (204), further comprising an illumination device (100) according to any of claims 1 to 10, wherein first pixels (208) of the image sensor (204) record the part of the scene illuminated with the substantially homogeneous illumination profile (154) and second pixels (210) record the spot pattern projected into the scene.

12. Camera system according to claim 11, further comprising a camera controller (206) adapted to set the exposure time of the image sensor (204), wherein the camera controller (206) is adapted to set a first exposure time in order, with the first pixels (208) of the image sensor (204), to record the scene with the substantially homogeneous illumination profile (154), and a second exposure time, which is shorter than the first exposure time, in order, with the second pixels (210) of the image sensor (204), to record the scene with the spot pattern projected into the scene.

13. Camera system according to claim 11 or 12, wherein the camera controller (206) is adapted to record a 2D image of the scene from signal values of the first pixels (208), and to determine 3D information about the scene from signal values of the second pixels by triangulation.

14. Camera system according to claim 12 or 13, wherein the camera controller (206) is adapted to at least partly replace the signal values obtained by the second pixels (210) during the first exposure time with signal values obtained by the second pixels (210) during the second exposure time.

15. Camera system according to claim 12, wherein the camera (202) is a time-of-flight camera, and wherein the camera controller (206) is adapted to obtain a first 3D partial image of the scene from signal values of the first pixels (208) and a second 3D partial image of the scene from signal values of the second pixels (210), wherein the camera controller is adapted to combine the two 3D partial images to form a 3D image of the scene.

16. Method for illuminating a scene, comprising the following steps:
emitting, by means of an array (104) of light sources (106), individual light beams (108),
projecting, by means of a first optical unit (110), the light beams (108) as spots (152) into the scene in order to illuminate the scene with a spot pattern,
simultaneously with projecting the light beams (108) as spots, partly expanding, by means of a second optical unit (118), the light beams (108) in order, with the expanded proportion of the light beams (108), to illuminate the scene together with the spot pattern with a substantially homogeneous illumination profile (154), wherein the expanded proportion of the light beams (108) amounts to less than 90% of the total intensity of the light beams (108).

## Revendications

1. Dispositif d'éclairage permettant d'éclairer une scène, comportant un réseau (104) de sources lumineuses (106) qui sont configurées pour émettre respectivement un faisceau lumineux (108), comportant en outre une première optique (110) et une seconde optique (118), dans lequel la première optique (110) reçoit les faisceaux lumineux (108) émis par les sources lumineuses (106) et les dirige vers la seconde optique (118), dans lequel la première optique (110) est une optique de formation d'image qui projette les faisceaux lumineux (108) individuels dans la scène sous forme de points (152) afin d'éclairer la scène avec un motif de points, et la seconde optique (118) est une optique d'élargissement qui élargit partiellement les faisceaux lumineux (108) individuels afin d'éclairer la scène avec la partie élargie des faisceaux lumineux (108) simultanément avec le motif de points avec un profil d'éclairage sensiblement homogène (154), dans lequel la partie élargie des faisceaux lumineux (108) est inférieure à 90 % de l'intensité lumineuse des faisceaux lumineux (108) émis par les sources lumineuses (106).

2. Dispositif d'éclairage selon la revendication 1, dans lequel la partie élargie des faisceaux lumineux (108) est inférieure à 80 %, de préférence inférieure à 70 %, plus préférablement inférieure à 60 %, plus préférablement inférieure à 50 % de l'intensité lumineuse des faisceaux lumineux (108) émis par les sources lumineuses (106).

3. Dispositif d'éclairage selon la revendication 1 ou 2, dans lequel la seconde optique (118) élargit les faisceaux lumineux (108) avec un angle d'élargissement (ϑ) qui est égal à une distance angulaire (γ), ou à un multiple entier de celle-ci, entre deux faisceaux lumineux (108).

4. Dispositif d'éclairage selon la revendication 3, dans lequel les deux faisceaux lumineux (106) sont des faisceaux lumineux immédiatement adjacents.

5. Dispositif d'éclairage selon l'une des revendications 1 à 4, dans lequel la seconde optique (118) est une optique diffractive, réfractive ou diffusive.

6. Dispositif d'éclairage selon l'une des revendications 1 à 5, dans lequel la seconde optique (118) est une optique diffractive, dans lequel l'optique diffractive est configurée de sorte que l'angle (δ) entre des maximums d'intensité d'ordres de diffraction adjacents correspond sensiblement à l'angle d'ouverture (α) d'un faisceau lumineux (108) divisé par un nombre entier supérieur ou égal à 1.

7. Dispositif d'éclairage selon l'une des revendications 1 à 6, dans lequel la seconde optique (118) est une optique diffractive qui diffracte les faisceaux lumineux (108) individuels respectivement avec un angle de diffraction maximal égal à une distance angulaire (γ), ou à un multiple entier de celle-ci, entre deux faisceaux lumineux (108) moins un angle d'ouverture (α) d'un faisceau lumineux (108).

8. Dispositif d'éclairage selon l'une des revendications 1 à 7, dans lequel la seconde optique (118) est une optique diffractive, et dans lequel l'intensité lumineuse à la sortie de l'optique diffractive est au moins 50 % plus grande dans l'ordre de diffraction respectivement zéro que dans l'ordre de diffraction comportant la seconde plus grande intensité lumineuse.

9. Dispositif d'éclairage selon la revendication 8, dans lequel l'intensité lumineuse à la sortie de l'optique diffractive est au moins 100 %, de préférence au moins 150 %, plus préférablement au moins 200 %, plus grande dans l'ordre de diffraction respectivement nul que dans l'ordre de diffraction comportant la seconde plus grande intensité lumineuse.

10. Dispositif d'éclairage selon l'une des revendications 1 à 5, dans lequel la seconde optique (118) est une optique réfractive qui présente un réseau (128) de microlentilles (130), dans lequel un facteur de remplissage des microlentilles (130) dans le réseau est inférieur à 100 %, de préférence inférieur à 90 %, plus préférablement inférieur à 80 %, plus préférablement inférieur à 70 %, plus préférablement inférieur à 60 %, plus préférablement inférieur à 50 %.

11. Système à caméra, comportant une caméra (202) qui présente un capteur d'image (204), comportant en outre un dispositif d'éclairage (100) selon l'une des revendications 1 à 10, dans lequel des premiers pixels (208) du capteur d'image (204) capturent la partie de la scène éclairée par le profil d'éclairage sensiblement homogène (154) et des seconds pixels (210) capturent le motif de points projeté dans la scène.

12. Système à caméra selon la revendication 11, comportant en outre une commande de caméra (206) qui est configurée pour régler le temps d'exposition du capteur d'image (204), dans lequel la commande de caméra (206) est configurée pour régler un premier temps d'exposition pour capturer, avec les premiers pixels (208) du capteur d'image (204), la scène avec le profil d'éclairage sensiblement homogène (154), et un second temps d'exposition plus court que le premier temps d'exposition pour capturer, avec les seconds pixels (210) du capteur d'image (204), la scène avec le motif de points projeté dans la scène.

13. Système à caméra selon la revendication 11 ou 12, dans lequel la commande de caméra (206) est configurée pour enregistrer une image 2D de la scène à partir de valeurs de signal des premiers pixels (208), et pour déterminer des informations 3D concernant la scène au moyen d'une triangulation à partir de valeurs de signal des seconds pixels.

14. Système à caméra selon la revendication 12 ou 13, dans lequel la commande de caméra (206) est configurée pour remplacer au moins partiellement les valeurs de signal obtenues par les seconds pixels (210) lors du premier temps d'exposition par des valeurs de signal obtenues par les seconds pixels (210) lors du second temps d'exposition.

15. Système à caméra selon la revendication 12, dans lequel la caméra (202) est une caméra temps de vol, et dans lequel la commande de caméra (206) est configurée pour obtenir une première image partielle 3D de la scène à partir de valeurs de signal des premiers pixels (208) et une seconde image partielle 3D de la scène à partir de valeurs de signal des seconds pixels (210), dans lequel la commande de caméra est configurée pour combiner les deux images partielles 3D en une image 3D de la scène.

16. Procédé permettant d'éclairer une scène, comportant les étapes consistant à :
émettre, au moyen d'un réseau (104) de sources lumineuses (106), des faisceaux lumineux (108) individuels,
projeter, au moyen d'une première optique (110), les faisceaux lumineux (108) sous forme de points (152) dans la scène afin d'éclairer la scène avec un motif de points,
en même temps que la projection des faisceaux lumineux (108) sous forme de points, élargir partiellement, au moyen d'une seconde optique (118), les faisceaux lumineux (108) afin d'éclairer, avec la partie élargie des faisceaux lumineux (108), la scène conjointement avec le motif de points avec un profil d'éclairage sensiblement homogène (154), dans lequel la partie élargie des faisceaux lumineux (108) est inférieure à 90 % de l'intensité totale des faisceaux lumineux (108).
